# NEUE EUROPÄISCHE PATENTSCHRIFT

(11) **EP 0 647 542 B2**
(45) Veröffentlichungstag und Bekanntmachung des Hinweises auf die Entscheidung über den Einspruch: **19.03.2003**
(45) Hinweis auf die Patenterteilung: 17.12.1997
(21) Anmeldenummer: 94112715.1
(22) Anmeldetag: 16.08.1994
(51) Int. Cl.: B60N 2/02

(54) **Sitzverstelleinrichtung mit einem elektrischen Antriebsmotor und einem diesem nachgeordneten Getriebe**
Seat positioning drive with an electric drive motor, followed by a gearbox
Commande de positionnement d'un siège avec un moteur électrique d'entraînement, suivi d'une boîte de vitesse

(30) Priorität: 12.10.1993 DE 9315382 U
(43) Veröffentlichungstag der Anmeldung: 12.04.1995
(73) Patentinhaber: ROBERT BOSCH GMBH, 70442 Stuttgart (DE)
(72) Erfinder: Winter, Manfred, Dipl.-Ing. (TH), D-77839 Lichtenau (DE); Dankowski, Konrad, Ing., D-77815 Bühl (DE); Bauer, Peter-Josef, D-77815 Bühl (DE); Schiller, Herbert, Dipl.-Ing. (FH), D-77830 Bühlertal (DE)

(56) Entgegenhaltungen:
- EP-A- 0 170 989
- EP-A- 0 379 615
- EP-A- 0 511 531
- CH-A- 664 273
- DE-A- 2 902 429
- DE-A- 3 323 923
- DE-A- 3 519 055
- DE-A- 3 519 324
- DE-C- 4 101 470
- DE-U- 8 903 714
- FR-A- 2 665 739
- JP-A- 5 383 220
- US-A- 3 659 780
- US-A- 4 186 524
- Brockhaus ABC der Naturwissenschaft und Technik, Leipzig; 1948;Verlags-Nr.61; Seiten 208,212,492-493
- Römpp Chemielexikon, Bd. 2, 1990,Seite 1585
- Römpp Chemielexikon, Bd.3, 1990, Seite 2289

## Beschreibung

### Stand der Technik

Die Erfindung geht aus von einem Stellantrieb nach der Gattung des Hauptanspruchs. Mit der EP-OS 0 170 989 ist eine Schneckengetriebeanordnung bekanntgeworden, bei der das Schneckenrad über eine Mitnehmerscheibe mit einer Abtriebswelle verbunden ist. Die Mitnehmerscheibe ist auf die Abtriebswelle aufgespritzt und weist Lagerhülsen auf, über die die Abtriebswelle im Getriebegehäuse gelagert ist. Auf der Abtriebswelle ist ein Abtriebszahnrad befestigt, von dem dann eine Verstellbewegung abgeleitet werden kann.

Ferner ist schon ein Stellantrieb im Handel, bei dem die die Stellbewegung übertragenden, sich drehenden Getriebeteile in speziellen Elementen aus Metall, beispielsweise in Lagerbuchsen, gelagert sind, welche in der Wandung des Getriebegehäuses angeordnet sind. Ein solcher Aufbau ist aufwendig und führt zu einem relativ schweren Getriebe, weil dort auch die Getriebeteile zumindest teilweise aus Stahl hergestellt sind.

### Vorteile der Erfindung

Der erfindungsgemäße Stellantrieb mit den kennzeichnenden Merkmalen des Hauptanspruchs hat demgegenüber den Vorteil, daß sich ein leichtes, kostengünstig herstellbares Getriebe mit erheblich weniger Bauteilen ergibt.

Durch die in den Unteransprüchen aufgeführten Maßnahmen sind vorteilhafte Weiterbildungen und Verbesserungen des im Hauptanspruch angegebenen Stellantriebs möglich.

### Zeichnung

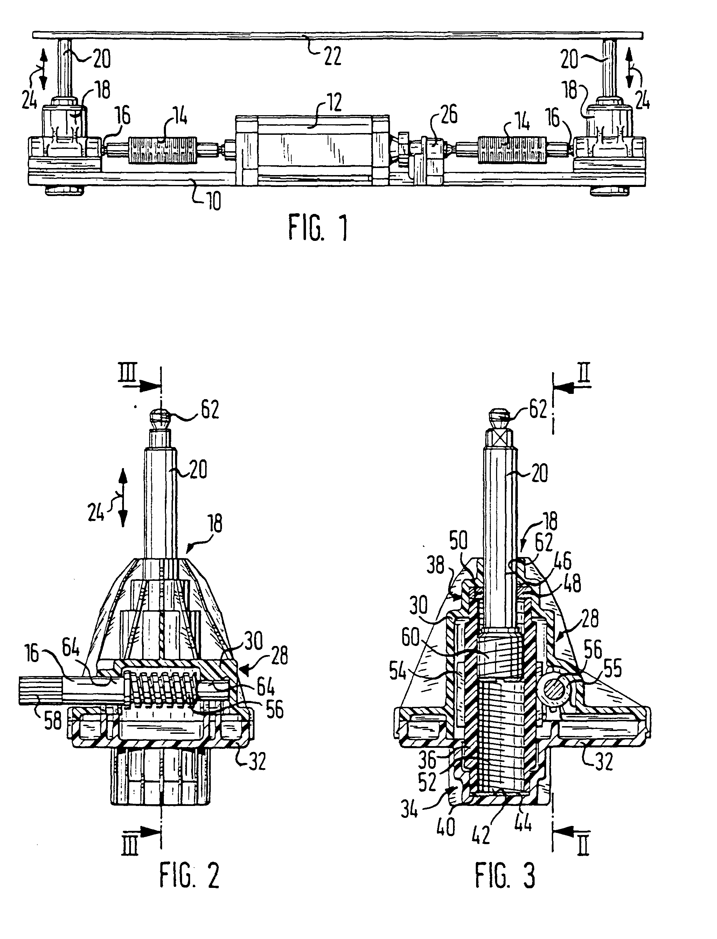

Ein Ausführungsbeispiel der Erfindung ist in der Zeichnung dargestellt und in der nachfolgenden Beschreibung näher erläutert. Es zeigen Figur 1 eine Prinzipdarstellung einer Anordnung zur Höhenverstellung eines Sitzes in einem Kraftfahrzeug, zu der ein elektrischer Antriebsmotor und zwei diesem nachgeordnete Hubgetriebe gehören, Figur 2 ein Hubgetriebe gemäß Figur 1 in vergrößerter Darstellung, entlang der Linie II-II in Figur 3 geschnitten und Figur 3 einen Schnitt durch das Hubgetriebe gemäß Figur 2, entlang der Linie III-III.

### Beschreibung des Ausführungsbeispiels

Eine in Figur 1 der Zeichnung dargestellte Sitzanordnung hat eine Grundplatte 10, auf der ein elektrischer Antriebsmotor 12 angeordnet ist. Mit den beiden Enden der nicht näher dargestellten Ankerwelle des Elektromotors 12 sind jeweils Kupplungselemente 14 drehfest verbunden. Die Kupplungselemente 14 sind langgestreckt und weisen eine Vielzahl von Lamellen auf, wodurch die Kupplungselemente 14 in einem bestimmten Maße biegbar sind. Die von der Ankerwelle des Elektromotors 12 abgewandten Enden der Kupplungen 14 sind jeweils drehfest mit einer Antriebswelle 16 verbunden. Die Antriebswellen 16 gehören jeweils zu einem Hubgetriebe 18, das ebenfalls fest mit der Grundplatte 10 verbunden ist. Die beiden Hubgetriebe 18 weisen jeweils ein als Hubspindel ausgebildetes Abtriebselement 20 auf, an deren freien Enden ein gemeinsamer Sitzträger 22 befestigt ist. Je nach Drehrichtung des Antriebsmotors 12 werden die beiden Abtriebselemente 20 der Hubgetrieben 18 gleichzeitig in einer der beiden mit den Doppelpfeilen 24 bezeichneten Richtungen verschoben. Da die Grundplatte 10 mit dem Chassis des Kraftfahrzeuges fest verbunden ist und der Fahrzeugsitz auf den Sitzträger 22 abgestützt ist, wird der nicht näher dargestellte Fahrzeugsitz je nach Drehrichtung des Elektromotors 12 abgesenkt oder angehoben. Zwischen der Ankerwelle des Elektromotors 12 und der einen Kupplung 14 ist ein Potentiometer 26 angeordnet, der einer zur Sitzverstelleinrichtung gehörenden Steuervorrichtung zugeordnet ist.

Wie die Figuren 2 und 3 zeigen, hat das Hubgetriebe 18 ein beim Ausführungsbeispiel zweiteiliges Gehäuse 28. Zu dem Gehäuse 28 gehören ein aus Kunststoff gefertigter Gehäusetopf 30 und ein mit diesem verrastbarer Gehäusedeckel 32, der ebenfalls aus Kunststoff hergestellt ist. In einem topfförmigen Abschnitt 34 des Gehäusedeckels 32 ist das eine Ende einer Gewindehülse 36 drehbar gelagert. Dabei ist der Außendurchmesser dieses Endabschnitts der Gewindehülse 36 von der inneren Wand des topfförmigen Abschnitts 34 direkt geführt. Das andere Ende der aus Kunststoff gefertigten Gewindehülse 36 ist auf die gleiche Weise in einem topfförmigen Abschnitt 38 des Getriebekastens 30 direkt drehbar gelagert. Weiter zeigt Figur 3, daß im Bereich des topfförmigen Abschnitts 34 zwischen der stirnseitigen Ringfläche 40 der Gewindehülse 36 und dem Boden 42 des topfförmigen Abschnitts 34 eine Anlaufscheibe 44 aus Stahl angeordnet ist. Eine ähnliche Anordnung ist im Bereich des topfförmigen Abschnitts 38 vorgesehen. Dort liegt am Boden 46 des topfförmigen Abschnitts 38 ein Stahlring 48 an, der sich andererseits an der anderen stirnseitigen Ringfläche 50 der Gewindehülse 36 abstützt. Die Anlaufscheibe 44 und der Stahlring 48 dienen der Verschleißminimierung an den Topfböden 42, 46 bzw. an den Ringflächen 40, 50 der Gewindehülse 36. Das Gewinde 52 der Gewindehülse 36 ist in der Längsbohrung der Hülse 36 angeordnet und als Mutterngewinde ausgebildet. Weiter weist die Gewindehülse 36 in ihrem Mittelabschnitt eine Schneckenrad-Außenverzahnung 54 auf, so daß diese Gewindehülse auch als Schnekkenrad 36 bezeichnet werden kann. Die Schneckenradverzahnung 54 kämmt mit der Verzahnung 55 einer direkt im Gehäusetopf 30 gelagerten Schneckenwelle oder Getriebeschnecke 56 (Fig. 2), die mit einem freien Ende 58 (Figur 2) aus dem Gehäuse 28 des Getriebes 18 ragt und die zur Antriebswelle 16 gehört. Mit dem Abschnitt 58 der Schneckenwelle 56 ist diese mit der Kupplung 14 drehfest verbunden. In dem Mutterngewinde 52 des Schneckenrades 36 ist ein Gewindeabschnitt 60 der Hubspindel 20 angeordnet. Die Hubspindel 20 ist samt dem Gewindeabschnitt 60 drehfest aber längsverschiebbar in einem Gleitlager 62 des Getriebegehäuses 28 geführt. Am freien Ende der Gewindespindel 20 befinden sich Befestigungsmittel 62, durch welche die Hubspindel 20 fest mit dem Sitzträger 22 verbunden werden kann.

Wenn der Elektromotor 12 aktiviert ist, werden über die Kupplungen 14 bei beiden Hubgetrieben 18 (Figur 1) die Schneckenwellen 56 angetrieben und mit diesen auch die Schneckenräder 36 in Drehung versetzt. Auf diese Weise werden die Hubspindeln 20 durch die Schneckenräder 36, je nach Drehrichtung der Schnekkenwelle 56, in der einen oder in der anderen Richtung des Doppelpfeils 24 hindurchgeschraubt.

Bemerkenswert ist, daß die Schneckenwelle 56 in Lagerstellen 64 des Gehäusetopfes 30 direkt und ohne die Anordnung von besonderen Lagerelementen gelagert ist. Das gleiche gilt auch für die Lagerstellen des Schneckenrades 54 in den beiden topfförmigen Bereichen 34 und 38 des Gehäusedeckels 32 und des Gehäusekastens 30. Auch dort sind zylinderförmige Endabschnitte des als Gewindehülse ausgebildeten Schneckenrades 36 direkt und ohne die Anordnung von besonderen Lagerelementen in den topfförmigen Abschnitten der Gehäuseteile drehbar gelagert. Die Lagerungen erfolgen also direkt in Wandlungen des Getriebegehäuses 28. Die Getriebeschnecke 56 ist aus einem vorzugsweise kohlefasergefüllten Kunststoff hergestellt. Das Schneckenrad 36, 54 ist mit Vorteil aus einem glasfasergefüllten Kunststoff gefertigt. Auch das Getriebegehäuse 28 mit seinem Gehäusetopf 30 und seinem Gehäusedeckel 32 besteht aus einem glasfasergefüllten Kunststoff.

Auf diese Weise ergibt sich ein besonders leichtes und kostengünstig herstellbares Hubgetriebe für die Höhenverstellung von Kraftfahrzeugsitzen. Es ist jedoch auch denkbar den erfindungsgemäßen Aufbau auf Stellantriebe zu übertragen, die zum Betätigen von Schiebedächern, Schiebefenstern oder dergleichen in Kraftfahrzeugen dienen. Abschnitt 58 der Schneckenwelle 56 ist diese mit der Kupplung 14 drehfest verbunden. In dem Mutterngewinde 52 des Schneckenrades 36 ist ein Gewindeabschnitt 60 der Hubspindel 20 angeordnet Die Hubspindel 20 ist samt dem Gewindeabschnitt 60 drehfest aber längsverschiebbar in einem Gleitlager 62 des Getriebegehäuses 28 geführt. Am freien Ende der Gewindespindel 20 befinden sich Befestigungsmittel 62, durch welche die Hubspindel 20 fest mit dem Sitzträger 22 verbunden werden kann.

Wenn der Elektromotor 12 aktiviert ist, werden über die Kupplungen 14 bei beiden Hubgetrieben 18 (Figur 1) die Schneckenwellen 56 angetrieben und mit diesen auch die Schneckenräder 36 in Drehung versetzt. Auf diese Weise werden die Hubspindeln 20 durch die Schneckenräder 36, je nach Drehrichtung der Schnekkenwelle 56, in der einen oder in der anderen Richtung des Doppelpfeils 24 hindurchgeschraubt.

Bemerkenswert ist, daß die Schneckenwelle 56 in Lagerstelien 64 des Gehäusetopfes 30 direkt und ohne die Anordnung von besonderen Lagerelementen gelagert ist. Das gleiche gilt auch für die Lagerstellen des Schneckenrades 54 in den beiden topfförmigen Bereichen 34 und 38 des Gehäusedeckels 32 und des Gehäusekastens 30. Auch dort sind zylinderförmige Endabschnitte des als Gewindehülse ausgebildeten Schneckenrades 36 direkt und ohne die Anordnung von besonderen Lagerelementen in den topfförmigen Abschnitten der Gehäuseteile drehbar gelagert. Die Lagerungen erfolgen also direkt in Wandlungen des Getriebegehäuses 28. Die Getriebeschnecke 56 ist aus einem vorzugsweise kohlefasergefüllten Kunststoff hergestellt. Das Schneckenrad 36, 54 ist mit Vorteil aus einem glasfasergefüllten Kunststoff gefertigt. Auch das Getriebegehäuse 28 mit seinem Gehäusetopf 30 und seinem Gehäusedeckel 32 besteht aus einem glasfasergefüllten Kunststoff.

Auf diese Weise ergibt sich ein besonders leichtes und kostengünstig herstellbares Hubgetriebe für die Höhenverstellung von Kraftfahrzeugsitzen. Es ist jedoch auch denkbar den erfindungsgemäßen Aufbau auf Stellantriebe zu übertragen, die zum Betätigen von Schiebedächern, Schiebefenstern oder dergleichen in Kraftfahrzeugen dienen.

## Patentansprüche

1. Sitzverstelleinrichtung mit einem elektrischen Antriebsmotor (12) und einem diesem nachgeordneten Schnekkengetriebe (18), dessen Getriebeschnecke (56) mit einem aus Kunststoff bestehenden Schneckenrad (54) kämmt, das mit einem Abtriebselement (20) gekoppelt ist, welches mit einem zu verstellenden Bauteil (22) eines Kraftfahrzeugsitzes wirkverbunden ist, und mit einem mehrteiligen Getriebegehäuse (28), in dessen Wandung das die Stellbewegung übertragende Schneckenrad (36) radial direkt und ohne Anordnung von besonderen Lagerelementen sowie die Getriebeschnecke gelagert sind wobei das Schneckenrad (54) des Schneckengetriebes als aus Kunststoff gefertigte Gewindehülse (36) mit einem innenliegenden Mutterngewinde (52) ausgebildet ist, und das Abtriebselement als drehfeste und längsverschiebbare Spindel (20) ausgebildet ist, die mit ihrem Schraubengewinde (60) durch das Mutterngewinde (52) hindurchschraubbar ist, **dadurch gekennzeichnet, daß**
und die Getriebeschnecke (56) aus einem kohlefasergefüllten Kunststoff besteht und direkt in der Wandung des Getriebegehäuses drehbar gelagert ist.

2. Stellantrieb nach Anspruch 1, **dadurch gekennzeichnet, daß** das Schneckenrad (54) aus einem glasfasergefüllten Kunststoff besteht.

3. Stellantrieb nach einem der vorhergehenden Ansprüche, **dadurch gekennzeichnet, daß** das Getriebegehäuse (30, 32) aus einem glasfasergefüllten Kunststoff hergestellt ist.

## Claims

1. Seat adjustment device having an electric drive motor (12) and a worm gear (18) which is connected downstream of the latter and whose gear worm (56) meshes with a worm wheel (54) which consists of plastic and is coupled to an output element (20) which is operationally connected to a component (22) to be adjusted on a motor vehicle seat, and having a multipartite gearbox housing (28) and in whose wall the worm wheel (36) transmitting the actuating movement is radially mounted directly and without the arrangement of special bearing elements, as is the gear worm,
the worm wheel (54) of the worm gear being constructed
as a threaded sleeve (36), which is produced from plastic, with an internal nut thread (52), and
the output element being constructed as a spindle (20) which is fixed in terms of rotation and longitudinally displaceable and which can be screwed with its screw thread (60) through the nut thread (52), **characterized in that** the gearbox housing is produced from plastic and the gear worm (56) consists of a carbon fibre filled plastic and is rotatably mounted directly in the wall of the gearbox housing.

2. Actuator according to Claim 1, **characterized in that** the worm wheel (54) consists of a glass fibre filled plastic.

3. Actuator according to one of the preceding claims, **characterized in that** the gearbox housing (30, 32) is produced from a glass fibre filled plastic.

## Revendications

1. Actionneur de siège comportant un moteur électrique (12) suivi d'une transmission à vis (18) dont la vis (56) engrène avec une roue à vis (54) en matière plastique, couplée à un élément de sortie (20) coopérant avec une partie à déplacer (22) d'un siège de véhicule automobile, et un boîtier de transmission (28) en plusieurs parties dont la paroi reçoit radialement de façon directe et sans installation d'éléments de paliers particuliers, la roue à vis (36) transmettant le mouvement d'actionnement, ainsi que la vis de transmission,
la roue à vis (54) de la transmission à vis étant un manchon fileté (36) fabriqué en matière plastique avec un filetage d'écrou (52) intérieur, et
l'élément de sortie étant en forme de broche (20), solidaire en rotation et coulissante longitudinalement, dont le filetage intérieur (60) se visse à travers l'écrou (52),
**caractérisé en ce que**
le boîtier de transmission est en matière plastique, et la vis (56) de transmission est réalisée en matière plastique renforcé par des fibres de carbone, et est montée rotative directement dans la paroi du boîtier de transmission.

2. Actionneur selon la revendication 1,
**caractérisé en ce que**
la roue à vis (54) est en une matière plastique chargée de fibres de verre.

3. Actionneur selon l'une des revendications précédentes,
**caractérisé en ce que**
le boîtier de transmission (30, 32) est fabriqué en une matière plastique renforcée par des fibres de verre.
